# EUROPEAN PATENT APPLICATION

(11) **EP 3 671 985 A1**
(43) Date of publication of application: **24.06.2020**
(21) Application number: 18215293.4
(22) Date of filing: 21.12.2018
(51) Int. Cl.: H02B 1/56, H02B 13/045

(54) **COMPARTMENT FOR A MEDIUM VOLTAGE GAS INSULATED SWITCHGEAR**

(71) Applicant: ABB Schweiz AG, 5400 Baden (CH)
(72) Inventor: Gentsch, Dietmar, 40882 Ratingen (DE); Fußbahn, Olaf, 40885 Ratingen (DE); Reuber, Christian, 47877 Willich (DE)
(74) Representative: Maiwald Patent- und Rechtsanwaltsgesellschaft mbH

(57) **Abstract**

The present invention relates to a compartment (1) for a medium voltage gas insulated switchgear. The compartment comprises a plurality of metal walls (10, 20, 30, 40, 50, 60). The plurality of metal walls form outer walls of the compartment. At least one metal wall comprises at least one corrugation (11, 12, 21, 41) and/or at least one indentation (31, 32, 33). The at least one corrugation and/or at least one indentation is inherent to the at least one metal wall.

## Description

### FIELD OF THE INVENTION

The present invention relates to a compartment for a medium voltage gas insulated switchgear, and a method of forming at least one metal wall for a compartment for a medium voltage gas insulated switchgear.

### BACKGROUND OF THE INVENTION

Medium voltage (MV) gas insulated switchgear (GIS) cubicles or compartments often consist of several pieces of sheet metal that are welded to each other to form a gastight compartment. The walls of MV GIS usually consist of flat pieces of sheet metal. Reinforcement profiles can then be affixed, through for example welding, to the side walls to avoid bulging when the compartment is pressurized with an insulating gas.

There is need to provide an improved compartment for a MV-GIS.

### SUMMARY OF THE INVENTION

Therefore, it would be advantageous to have an improved compartment for and improved means of providing a compartment for MV-GIS.

The object of the present invention is solved with the subject matter of the independent claims, wherein further embodiments are incorporated in the dependent claims. It should be noted that the following described aspects of the invention apply also for the compartment for a medium voltage gas insulated switchgear, and the method of forming at least one metal wall for a compartment for a medium voltage gas insulated switchgear.

In a first aspect, there is provided a compartment for a medium voltage gas insulated switchgear, the compartment comprising:
- a plurality of metal walls.
the plurality of metal walls form outer walls of the compartment. At least one metal wall comprises at least one corrugation and/or at least one indentation. The at least one corrugation and/or at least one indentation is inherent to the at least one metal wall.

In this manner, mechanical stability of the walls of the compartment can be improved, thereby enabling thinner walls to be utilised that cost less, and at the same time heat transfer from inside of the compartment to the outside is enhanced enabling higher nominal rated currents with the same conductors. To put this another way, inherent features are provided, when the walls are made, that provide for increased mechanical stability and increased surface area to enhance heat transfer.

That the at least one corrugation and/or at least one indentation is inherent to the at least one wall means that the walls with these features can be formed in one production step, through for example hydroforming or pressing.

In an example, one or more of the at least one corrugation and/or one or more of the at least one indentation are located on at least one outer surface of the compartment.

In an example, one or more of the at least one corrugation and/or one or more of the at least one indentation are located on at least one inner surface of the compartment.

In an example, one or more of the at least one corrugations are orientated in a vertical direction.

In this manner, improved heat transfer is provided from the inside of the compartment to the outside.

In an example, at least one wall comprises two or more corrugations that are orientated in a vertical direction.

In this way, in addition to an increased surface area two corrugations oriented vertically on the same wall can create a chimney effect. When the corrugations are located internally within the compartment, the hot insulating gas towards the top of the compartment moves down the chimney exchanging heat to the wall that is then exchanged to the outside, and as the gas cools it become denser and descends, and recirculates upwards as it heats up and then again progresses down the "chimney" again, thereby increasing heat exchange. Similarly, when the corrugations are on the outside, air moves up the chimney being warmed by the walls, and extracting heat from the walls, that is carried away leading to enhanced heat exchange.

In an example, a wall comprises two or more corrugations that are orientated in a vertical direction that are located on at least one inside surface of the compartment, and wherein a plate is located internal to the compartment parallel to the wall and adjacent to the two or more corrugations.

In this manner, an efficient naturally ventilated cooling system like a thermosiphon is realised.

In an example, one or more of the at least one corrugation each comprise a structure perpendicular to a local surface of the associated one or more metal wall of the at least one metal wall comprising the one or more corrugation.

In this manner, by having a structure perpendicular to the wall surface, mechanical fortification against internal pressure within the compartment is provided, and as the wall has an increased surface area, heat exchange is also improved.

In an example, the at least one indentation are located in a vicinity of at least one opening in one or more of the at least one metal wall.

In this manner, openings for bushings have indentations to increase the mechanical stability of the wall in the region of the opening. In other words, the wall at the position of the bushing is stiffened against inclination or declination.

In an example, one or more indentation are located around the at least one opening.

In an example, one or more indentation comprise at least one area indented towards the inside of the compartment and at least one area indented away from the inside of the compartment.

In an example one or more indentation are indented away from the inside of the compartment.

In an example, at least one metal wall comprises an intentionally roughened area.

In this manner, the surface area of the metal wall is increased leading to improved heat transfer.

In an example, the intentionally roughed area is located on an outer surface of the compartment and/or located on an inner surface of the compartment.
Certainly, when using hydroforming, the realization of a roughened surface at the inner surface is diifcult. In that case, a pressing process or an additional roughening process like sand blasting or knurling can be applied.

In an example, one or more of the metal walls at the edges of the wall have radii of curvature in the range 1 cm - 15 cm.

In other words, the upper, lower and lateral ends of walls have relatively large radii that increases the mechanical stiffness of the wall.

In an example, the at least one metal wall comprising the at least one corrugation and/or the at least one indentation has been manufactured by hydroforming or pressing before assembly of the compartment.

In other words, the walls including the corrugations/indentations have been manufactured by a hydroforming technology.

In a second aspect, there is provided a method of forming at least one metal wall for a compartment of a medium voltage gas insulated switchgear, the method comprising:
a) forming the at least one metal sheet with at least one corrugation and/or at least one indentation by hydroforming or pressing.

In an example, the method comprises:
b) forming (120) one or more corrugations of the at least one corrugation parallel to a side of one or more of the at least one metal wall.

In an example, the method comprises:
c) forming the at least indentation in a vicinity of at least one opening in one or more of the at least one metal wall.

In an example, the method comprises:
d) forming one or more of the at least one metal wall with a roughed area.

In an example, the method comprises:
e) forming one or more of the metal plates with radii of curvature at the edge in the range of 1 cm - 15 cm.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
- Fig. 1: shows a schematic example of a compartment for a medium voltage gas insulated switchgear;
- Fig. 2: shows a method of forming at least one metal wall for a compartment for a medium voltage gas insulated switchgear; and
- Figs. 3-5: show detailed examples of a compartment for a medium voltage gas insulated switchgear.

### DETAILED DESCRIPTION OF EMBODIMENTS

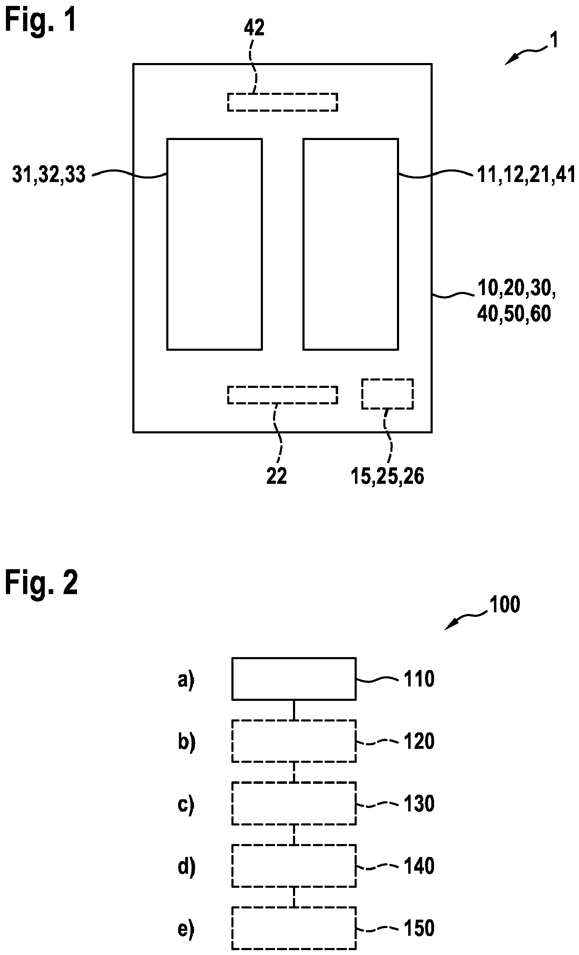

Fig. 1 shows an example of a compartment 1 for a medium voltage gas insulated switchgear. The compartment comprises a plurality of metal walls 10, 20, 30, 40, 50, 60. The plurality of metal walls form outer walls of the compartment. At least one metal wall comprises at least one corrugation 11, 12, 21, 41 and/or at least one indentation 31, 32, 33. The at least one corrugation and/or at least one indentation is inherent to the at least one metal wall.

According to an example, one or more of the at least one corrugation and/or one or more of the at least one indentation are located on at least one outer surface of the compartment.

According to an example, one or more of the at least one corrugation and/or one or more of the at least one indentation are located on at least one inner surface of the compartment.

According to an example, one or more of the at least one corrugations are orientated in a vertical direction.

According to an example, at least one wall comprises two or more corrugations that are orientated in a vertical direction.

According to an example, a metal wall comprises two or more corrugations that are orientated in a vertical direction that are located on at least one inside surface of the compartment. A plate 42 is located internal to the compartment parallel to the wall and adjacent to the two or more corrugations. The plate is affixed to at least one of the walls, and with the vertical corrugations forms an efficient heat exchange reverse chimney, where hot gas inside the compartment at the top enters the chimney, where heat is exchanged with the wall and the gas cools and descends the chimney continuing to exchange heat with the wall. The gas exits at the bottom, is heated within the compartment and rises. Thus, a circular motion of gas efficiently is provided enabling the efficient exchange of heat from inside the compartment to the outside of the compartment.

According to an example, one or more of the at least one corrugation each comprise a structure perpendicular to a local surface of the associated one or more metal wall of the at least one metal wall comprising the one or more corrugation.

According to an example, the at least one indentation 31, 32, 33 are located in a vicinity of at least one opening in one or more of the at least one metal wall.

According to an example, one or more indentation 31 are located around the at least one opening.

In an example, the one or more indentation is indented towards the inside of the compartment.

In an example, the one or more indentation is/are wave shaped.

According to an example, one or more indentation 32 comprise at least one area indented towards the inside of the compartment and at least one area indented away from the inside of the compartment. Thus, an indentation can protrude from the metal wall in both directions away from the plane of the metal wall.

According to an example, one or more indentation 33 are indented away from the inside of the compartment. Thus, the indentation extends outwards.

According to an example, at least one metal wall comprises an intentionally roughened area 22.

According to an example, the intentionally roughed area is located on an outer surface of the compartment and/or located on an inner surface of the compartment.

According to an example, one or more of the metal walls at the edges of the wall have radii of curvature 15, 25, 26 in the range of 1 cm - 15 cm.

According to an example, the at least one metal wall comprising the at least one corrugation and/or the at least one indentation has/have been manufactured by hydroforming or pressing before assembly of the compartment.

Fig. 2 shows a method 100 of forming at least one metal wall for a compartment of a medium voltage gas insulated switchgear in its basic steps. The method comprises: in a forming step 110, also referred to as step a), forming the at least one metal sheet with at least one corrugation and/or at least one indentation by hydroforming or pressing.

According to an example, the method comprises:
in a forming step 120, also referred to as step b), forming one or more corrugations of the at least one corrugation parallel to a side of one or more of the at least one metal wall.

According to an example, the method comprises:
in a forming step 130, also referred to as step c), forming the at least one indentation in a vicinity of at least one opening in one or more of the at least one metal wall.

In an example, step c) comprises, forming one or more indentation 32 with at least one first area indented in one direction away from a surface of the metal plate and with at least one second area indented in an opposite direction away from the surface of the metal plate. Thus, the at least one first indented area extends in the opposite direction to the at least one second indented area, with respect to a plane of the metal wall.

In an example, step c) comprises forming one or more indentation 33 in one direction away from a surface of the metal plate.

According to an example, the method comprises:
in a forming step 140, also referred to as step d), forming 140 one or more of the at least one metal wall with a roughed area 22.

According to an example, the method comprises:
in a forming step 150, also referred to as step e), forming one or more of the metal plates with radii of curvature at the edge in the range of 1 cm - 15 cm.

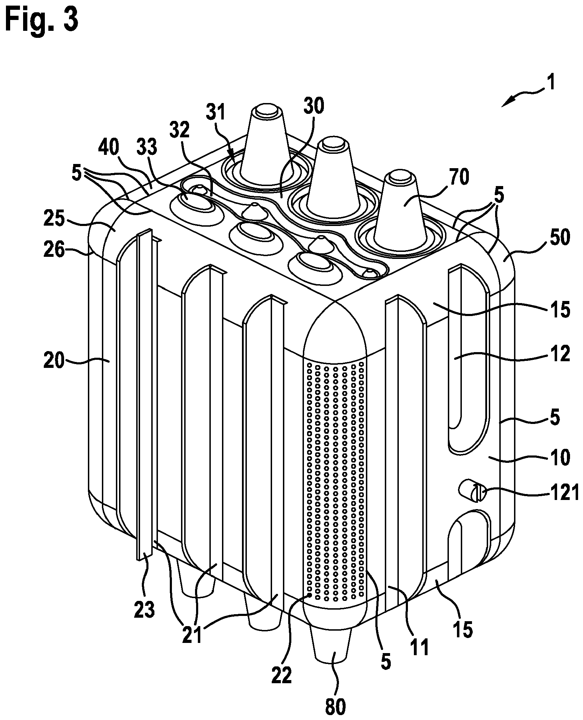

The compartment for a medium voltage gas insulated switchgear and the method of forming at least one metal wall for a compartment for a medium voltage gas insulated switchgear are now explained with respect to the specific detailed examples shown in Figs. 3-5. A suitable material of the walls is e.g. stainless steel.

Fig. 3 shows a sample GIS compartment 1, the walls of which have been made by hydroforming. Hydroforming enables almost arbitrary shaping of metal sheets in one production step. The compartment has 6 walls, where especially the front wall 10, the left side wall 20 and the top wall 30 are shown in Fig. 3. The walls have been welded together for achieving a gastight compartment. Regarding the welding, it is advantageous to have straight and short welding lines; therefore it is an option to have fewer or no corrugations in the area of the welding lines 5.

The left side wall 20 has three vertical corrugations 21 as an example. This shape results in a mechanical fortification of the wall against internal pressure and at the same time in an improved heat transfer from the inside of the compartment to the outside. The mechanical fortification is due to the addition of a structure that is at least partially vertical or perpendicular to the flat surface of the wall. Further, the effect of cold work hardening will increase the mechanical stiffness of the walls. The improved heat transfer is due to the increased surface and due to the chimney effect that is established when a neighbouring compartment or an end plate is installed next to the wall 20. The space that the corrugations form between adjacent compartments or between one compartment and an added plate can also be used for guiding the released gases in case of internal arcing. Further, the left side wall 20 comprises a region 22 where the outer surface of the wall 20 was roughened due to a dedicated hydroforming tool for an increased surface and therefore an improved heat transfer. The inner surface of 20 can optionally be roughened using an additional production step like sand blasting or knurling. The roughening can be applied to the entire surface or to regions of one or more walls of the compartment. When roughening the inside of the compartment, it has to be considered that due to the generation of mechanical tips on the surface the insulating properties can be affected, so the regions where roughening can be applied to the inside of the walls 10, 20, 30, 40, 50 and 60 have to be carefully chosen. Alternatively, also the roughening of the outer surfaces can be realised by sand-blasting or knurling.

The relatively large radii 25, 26 at the upper, lower and lateral ends of 20 further increase the mechanical stiffness of the side wall 20 and, after the welding, of the entire compartment 1. These radii are larger than the usual bending radius of the sheet metal processing, but are small enough not to constraint the devices that are inside the compartment, like the circuit breaker CB 100 or the interfaces, like the bushings 70, 80. Reasonable values for these radii are between 1 cm and 15 cm.

Additional ribs 23 can be added optionally e.g. by welding to the surface of the wall 20, preferably into the indented areas of the corrugations 21, for a further increase of the mechanical strength and increase in the heat transfer.

The front wall 10 has one vertical corrugation 11 running end-to-end from the top to the bottom of the compartment, similar to the corrugations 21. Further, the front wall 10 has a non-continuous corrugation 12 that is interrupted for the interface of the CB to its drive, where a flat area is required. Nevertheless, also the corrugation 12 has a positive effect on the mechanical fortification and on the improved heat transfer.

The relatively large radius 15 at the upper and lower ends of 10 further increases the mechanical stiffness of the side wall 10 and, after the welding, of the entire compartment 1.

In the top wall 30, a naturally ventilated chimney effect cannot be created with corrugations. However, in case of forced ventilation, end-to-end corrugations can also be advantageous here for a further improved heat transfer.

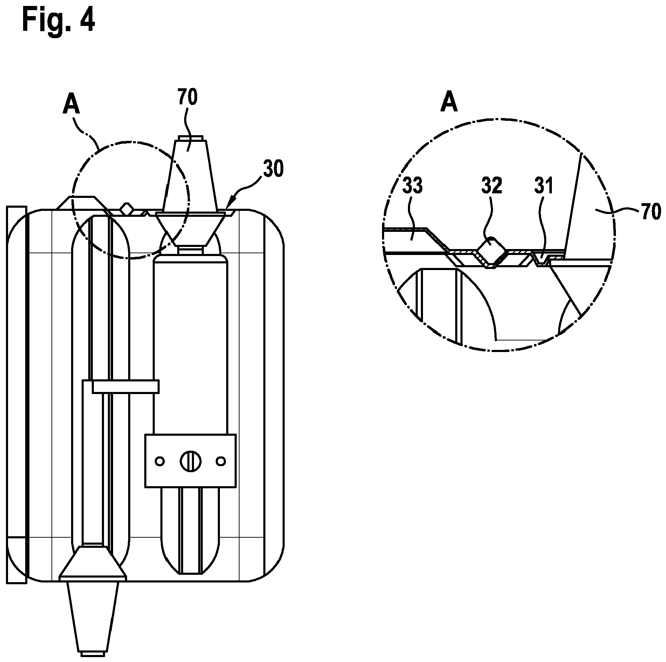

Other indentations in the top wall 30 can nevertheless be added for an increased mechanical stability and for an improved heat transfer due to the increase of the surface. Fig. 4 shows a cross-section of the indentations 31, 32 and 33 in the top wall 30. The first indentation 31 has the shape of a wave and is circular around the openings for the bushings 70, especially for increasing the mechanical stability of the region of the wall 30 where the bushings 70 pass through the wall 30. The second indentation 32 consists of a larger area that is formed towards the inside of the compartment and several smaller areas that are formed towards the outside of the compartment. The third indentation 33 has an elliptical shape towards the outside of the compartment. The direction of the indentation, i.e. mainly towards the inside of the compartment or mainly towards the outside of the compartment can be chosen according to the available space, considering the constraints inside or outside of the compartment.

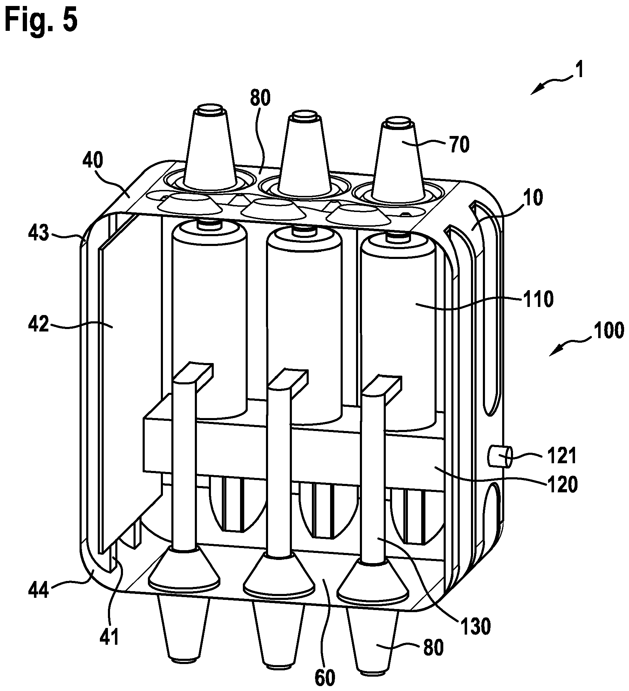

Fig. 5 shows the inside of the CB compartment 1 with a removed left side wall 20. The exemplary CB 100 mainly consists of the switching poles 110, the gearbox 120, the mechanical link 121 and the conductors 130. The switching poles 110 are e.g. epoxy-insulated vacuum interrupters. The upper ends of the switching poles 110 are electrical terminals that are connected to the bushings at the upper side 70. The switching poles 110 provide a second electrical terminal that is connected with the conductors 130 to the bushings at the lower side 80. The switching poles 110 are mechanically connected to the gear box 120. The gear box 120 has a mechanical link to the outside of the compartment for the connection of a drive that can bring and hold the switching poles in an open state, where the electrical connection of the upper and lower bushings is interrupted and in a closed state, where the electrical connection of the upper and lower bushings is established so that the CB compartment 1 can transfer electrical current from its upper side to its lower side or vice-versa.

Fig. 5 further shows the inside plate 42. Together with the corrugations 41, the inner plate 42 realises a naturally ventilated cooling system like a thermosiphon. The insulating gas inside the compartment 1 is heated up by the electrical losses.

Therefore, the hot gas will move to the upper side of the compartment into the region of the hot gas inlet 43. The outside of the compartment 1 is relatively cold so that the insulating gas will cool down and move downwards inside the channel that is formed or built from the wall 40, the corrugations 41 and the inside plate 42. At the lower end of said channel, the gas will leave the channel through the cold gas outlet 44. In this way, an additional pump is realised for an improved circulation of the insulating gas in the CB compartment 1, resulting in an improved heat transfer.

It is also possible to combine several neighbouring walls to one piece to reduce the number of weldlines. E.g. the front wall 10 and the top wall 30 can be manufactured as one piece, or the front wall 10, the side wall 20 and the top wall 30 can be manufactured as one piece with the hydroforming technology.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

### Reference Numbers

1 Sample GIS compartment
5 Welding line
10 Front wall
11 End-to-end corrugation in 10
12 Non-continuous corrugation in 10
15 Large radius at the upper and lower end of 10
20 Left side wall
21 End-to-end corrugation in 20
22 Roughened surface area of 20
23 Additional rib at the wall 20
25 Large radius at the upper end of 20
26 Large radius at the lateral end of 20
30 Top wall
31 First shape of indentation in 30
32 Second shape of indentation in 30
33 Third shape of indentation in 30
40 Back wall
41 End-to-end corrugation in 40
42 Inside plate
43 Hot gas inlet
44 Cold gas outlet
50 Right side wall
60 Bottom wall
70 Bushings at the upper side
80 Bushings at the lower side
100 Circuit breaker (CB)
110 Switching pole
120 Gearbox
121 Mechanical link to the CB drive
130 Conductor

## Claims

1. A compartment (1) for a medium voltage gas insulated switchgear, the compartment comprising:
- a plurality of metal walls (10, 20, 30, 40, 50, 60);
- wherein, the plurality of metal walls form outer walls of the compartment;
- wherein, at least one metal wall comprises at least one corrugation (11, 12, 21, 41) and/or at least one indentation (31, 32, 33); and
- wherein, the at least one corrugation and/or at least one indentation is inherent to the at least one metal wall.

2. Compartment according to claim 1, wherein one or more of the at least one corrugation and/or one or more of the at least one indentation are located on at least one outer surface of the compartment.

3. Compartment according to any of claims 1-2, wherein one or more of the at least one corrugation and/or one or more of the at least one indentation are located on at least one inner surface of the compartment.

4. Compartment according to any of claims 1-3, wherein one or more of the at least one corrugations are orientated in a vertical direction.

5. Compartment according to claim 4, wherein at least one wall comprises two or more corrugations that are orientated in a vertical direction.

6. Compartment according to claim 5, wherein a wall comprises two or more corrugations that are orientated in a vertical direction that are located on at least one inside surface of the compartment, and wherein a plate (42) is located internal to the compartment parallel to the wall and adjacent to the two or more corrugations.

7. Compartment according to any of claims 1-6, wherein one or more of the at least one corrugation each comprise a structure perpendicular to a local surface of the associated one or more metal wall of the at least one metal wall comprising the one or more corrugation.

8. Compartment according to any of claims 1-7, wherein the at least one indentation (31, 32, 33) are located in a vicinity of at least one opening in one or more of the at least one metal wall.

9. Compartment according to claim 8, wherein one or more indentation (31) are located around the at least one opening.

10. Compartment according to claim 8, wherein one or more indentation (32) comprise at least one area indented towards the inside of the compartment and at least one area indented away from the inside of the compartment.

11. Compartment according to claim 8, wherein one or more indentation (33) are indented away from the inside of the compartment.

12. Compartment according to any of claims 1-11, wherein at least one metal wall comprises an intentionally roughened area (22).

13. Compartment according to claim 12, wherein the intentionally roughed area is located on an outer surface of the compartment and/or located on an inner surface of the compartment.

14. Compartment according to any of claims 1-13, wherein one or more of the metal walls at the edges of the wall have radii of curvature (15, 25, 26) in the range of 1 cm - 15 cm.

15. Compartment according to any of claims 1-14, wherein the at least one metal wall comprising the at least one corrugation and/or the at least one indentation have been basically manufactured by hydroforming or pressing before assembly of the compartment.

16. A method (100) of forming at least one metal wall for a compartment of a medium voltage gas insulated switchgear, the method comprising:
a) forming (110) the at least one metal sheet with at least one corrugation and/or at least one indentation by hydroforming or pressing.

17. Method according to claim 16, comprising:
b) forming (120) one or more corrugations of the at least one corrugation parallel to a side of one or more of the at least one metal wall.

18. Method according to any of claims 16-17, comprising:
c) forming (130) the at least indentation in a vicinity of at least one opening in one or more of the at least one metal wall.

19. Method according to any of claims 16-18, comprising:
d) forming (140) one or more of the at least one metal wall with a roughed area (22).

20. Method according to any of claims 16-19, comprising:
e) forming (150) one or more of the metal plates with radii of curvature at the edge in the range of 1 cm - 15 cm.
